# EUROPEAN PATENT APPLICATION

(11) **EP 2 572 868 A2**
(43) Date of publication of application: **27.03.2013**
(21) Application number: 12185186.9
(22) Date of filing: 20.09.2012
(51) Int. Cl.: B29C 70/86, B29C 39/12, B29C 70/08, B29L 23/00, B29K 105/10

(54) **Annular structure having multiple reinforcement bands and a cast-in-place core**

(30) Priority: 20.09.2011 US 201113237166
(71) Applicant: Milliken & Company, Spartanburg, SC 29303 (US)
(72) Inventor: Dotson, Michael Edward, Greenville, South Carolina, 29601 (US); Endicott, James Milo, Greenville, South Carolina, 29605 (US); Petri, Patrick A., Greer, South Carolina, 29650 (US); Vogt, Kirkland W., Simpsonville, South Carolina, 29681 (US)
(74) Representative: HOFFMANN EITLE

(57) **Abstract**

An annular reinforcement structure (1) is provided having a first reinforcement band (2) and a second reinforcement band (3) in a spaced-apart, concentric relationship, and a cast-in-place core material (4) positioned between the first and second reinforcement bands and bonded thereto.

## Description

This invention relates generally to a composite structure, and particularly to an annular structure having inner and outer reinforcement bands in concentric relationship, separated by a cast-in-place, core layer.

### Joint Research Agreement

The claimed invention was made under a joint research agreement between Milliken & Company and Michelin Americas Research Company, a division of Michelin North America, Inc. The joint research agreement was in effect before the date the claimed invention was made, and the claimed invention was made as a result of activities undertaken within the scope of the joint research agreement.

### Background of the Invention

Various industrial products, such as belts for power transmission, hoses and tires, incorporate a reinforcement material in an elastomeric matrix, to achieve both strength and flexibility. For example, the reinforcing materials may be textile fabrics, metal sheets, fibers or cords made up of organic polymers, inorganic polymers, metals and combinations thereof. The reinforcement material may be a multi-ply structure.

Manufacture of the composite product typically requires that the spatial relationship of the reinforcement material and the elastomeric matrix be consistent throughout. In some circumstances, it may be advantageous to provide multiple layers of reinforcement material, wherein the layers are spaced apart, with the space between the reinforcement layers filled with a suitable core material, such as an elastomer.

United States Patent Nos. 6,769,465 B2 and 7,650,919 B2 disclose an annular band incorporated into a vehicle tire. The annular band is formed in situ, along with the tread portion and various other components of the tire. The manufacturing process has various constraints, including maintaining the alignment of the components, while the process steps are carried out. Accordingly, there is a desire for an alternative, flexible process.

### Summary of the Invention

The present invention provides for the separate manufacture of an annular reinforced structure having an inner reinforcement band and an outer reinforcement band positioned around the inner reinforcement band, whereby the two bands are spaced apart and concentric. The reinforcement bands may constitute a cord of monofilament or multi-filament yarns, and the cord is wound into a helix making at least three revolutions.

The inner and outer reinforcement bands are separated by a cast-in-place core material. The core material is a solid having a density of 0.75 g/cm³ or greater, in particular a density of 0.90 g/cm³ or greater. The core material may be selected from a wide range of organic and inorganic materials that may be cast in place. By way of example, the core material may be a natural or synthetic polymer, including thermoplastic and thermosetting materials. In particular, the core material may be an elastomer.

The annular reinforced structure may be made by first placing the inner and outer reinforcement bands in a suitable mold, whereby the two bands are held in spaced apart, concentric relationship. Next, the core material is cast in the space between the inner and outer reinforcement bands. The core material may be cast as a liquid reaction mixture capable of polymerizing, which then polymerizes in situ. Alternatively, the core material may be an uncured mixture of reactants, which is then cured, such as by cross-linking of polymers or hydration and hardening of cement. In another alternative, the core material is cast as a melt or in a plastic state and allowed to set.

After the core material is cured and/or set, the annular reinforcement structure is removed from the mold. The reinforcement structure can be stored or transported for future use as a subassembly in another manufacturing process, such as described herein.

Also within the scope of the invention is to embed the annular reinforced structure, or a portion thereof, in a suitable matrix material. The matrix material may be selected from a wide range of organic and inorganic materials, especially those that may be cast with the annular reinforced structure embedded therein. By way of example, the matrix material may be a natural or synthetic polymer, including thermoplastic and thermosetting materials. In another example, the matrix material is a ceramic, concrete or organometalic compound. The core material and the matrix material may be different materials with significantly different properties.

For many applications, a matrix material is bonded to the outside of the outer reinforcement band and/or the inside of the inner reinforcement, that is, on the opposite side of the reinforcement bands from the core material, referred to as the exterior of the reinforcement bands. Accordingly, it will often be desirable to avoid coating the exterior of the reinforcement bands with the core material. In one embodiment of the invention, the outer and/or inner reinforcement bands are impermeable to the core material during the casting step, including being impermeable to a liquid reaction mixture, uncured material, or material in a melted or plastic state.

In another embodiment of the invention, on or both of the exterior sides of the reinforcement bands in the annular reinforced structure are prevented from being coated by the core material by creating a seal between the reinforcement bands and the mold. For example, the mold may be provided with a resilient surface, such as by providing the mold with an elastomeric sheath, which can deform to the contours of the reinforcement bands, allowing a band to be pressed into the surface of the mold.

The outer and inner reinforcement bands may be treated to improve the bond strength between the reinforcement band and the core material and/or the matrix material. By way of example, an adhesion promoter, such as resorcinol-formaldehyde latex, may be applied to the surfaces of the reinforcement bands.

An advantage of the present invention is that the annular reinforcement structure may be a modular unit, which can be stored in inventory until it is ready to be used in a manufacturing process. As used herein, the term "modular" means an annular reinforcement structure that has not been incorporated in a matrix material and/or is not bonded to another structure, although the annular reinforcement structure may be have a surface coating of an adhesion promoter or other composition intended to facilitate bonding the annular structure to another material, whereby the coating does not exceed a thickness of 2 mm.

### Brief Description of the Drawings

Figure 1 is a top perspective view of the annular reinforcement structure.
Figure 2 is a cut-away perspective view of the annular reinforcement structure.
Figure 3 is a top view of the annular reinforcement structure in a mold.
Figure 4 is a cut-away perspective view of the annular reinforcement structure in a mold.
Figure 5 is a top view of a mold having a hinged outer part and an expandable inner part.
Figure 6 is a cut-away perspective view of a mold having a hinged outer part and an expandable inner part, with the inner and outer reinforcement bands in place.
Figure 7 is an enlargement of the side of the mold, showing the seal between the resilient surface of the mold and the inner and outer reinforcement bands.
Figure 8 is a top perspective view of the annular reinforced structure embedded in a matrix material.
Figure 9 is a side cross-section view of the annular reinforced structure embedded in a matrix material.

### Detailed Description of the Invention

Without limiting the scope of the invention, the preferred embodiments and features are hereinafter set forth. All of the United States patents, published applications and unpublished pending applications, which are cited in the specification, are hereby incorporated by reference. Unless otherwise indicated, conditions are 25 °C, 1 atmosphere of pressure and 50% relative humidity, concentrations are by weight, and molecular weight is based on weight average molecular weight. The terms "polymer" or "polymeric" as used in the present application denotes a material having a weight average molecular weight (Mw) of at least 5,000. Such polymeric materials can be amorphous, crystalline, semi-crystalline or elastomeric polymeric materials.

### Inner and Outer Reinforcement Bands

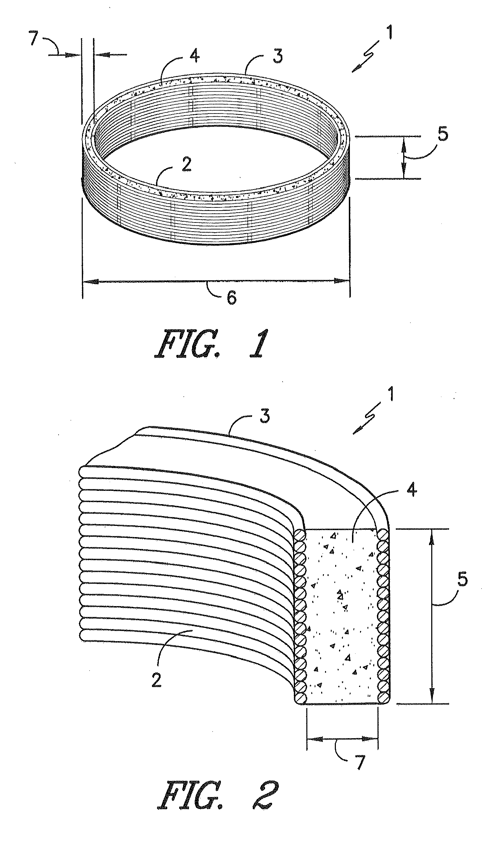

Referring to Figures 1 and 2, annular reinforced structure 1 has inner reinforcement band 2, outer reinforcement band 3, and a cast-in-place core material 4. The reinforced structure may be made with a range of dimensions. By way of example, the width 5 of the annular reinforced structure may range from 1 cm to 2 meters, and the outside diameter 6 may range from 7 cm to 4 meters. By way of example, the distance between the inner reinforcement band 2 and the outer reinforcement band 3, that is, the thickness 7 of core material 4, may range from 2 mm to 25 mm.

In various embodiments of the invention it is desirable to allow for relative movement of the inner and outer reinforcement bands within annular reinforced structure 1, such as may be created by flexing or shear force. In such circumstances, core material 4 may be provided with a minimum thickness 7 of 5 mm. Applications for the annular reinforced structure of the present invention, including suitable structures, alignment and spacing of the reinforcement bands, may be found in US 6,769,465 B2 and US 7,650,919 B2.

Each of the reinforcement bands is a circular strip, characterized as being flexible in the radial direction and relatively inextensible in circumference. In one embodiment of the invention, the reinforcement bands are sufficiently flexible to be subjected to a bend radius that is one-tenth or less of the radius of the band when the band is oriented in the shape of a circle, without experiencing a permanent set in the band. The inner and outer reinforcement bands may be the same or different, both in terms of materials of construction and design.

By way of example, the reinforcement band may be a woven or non-woven textile structure, arrangement of monofilament and/or multifilament cords, bi-component yarns, spun yarns, braided cords, single or multilayer sheets of polymers or metals, or a combination of the foregoing materials. By way of example, the reinforcement bands may be constructed of fiberglass, rayon, nylon, aramid, polyester, carbon or metal, such as steel. The materials may be treated to improve performance, allow for easier manufacturing and/or improve bond strength between materials. Examples include brass-plated steel, elastomer coated cords and the use of adhesion promoters, such as resorcinol-formaldehyde latex. Further examples of suitable reinforcement bands may be found in belts for power transmission, hoses, tires, rollers, strapping and gaskets.

By way of further example, materials having a Young's modulus (GPa), of 35 or greater, or even 70 or greater, are useful herein. Alternatively, the stiffness of the reinforcement band and the core material may be characterized by a relative Young's modulus of 1,000:1 or even 10,000:1, respectively.

In one example, the reinforcement band may be a monofilament or multi-filament cord wound into a helix and making at least three revolutions. The multiple windings of the cord may be held together by a yarn intertwined between adjacent cords, for example by weaving or knitting, with the yarn arranged perpendicular to the cords. The intertwined yarn may include fibers that can be melted to fuse the structure together, thereby providing stability to the band, especially in the axial direction. Examples of useful reinforcement band structures may be found in pending United States Patent Application Serial No. 12/661,196, filed March 12, 2010, which is hereby incorporated by reference.

Also within the scope of the invention is the use of multi-ply reinforcement bands. For example, layers of reinforcement material may overlay one another, perhaps joined by a suitable binder, adhesive or stitch bond. The plies may be oriented parallel to each other or at an angle, for example, by winding one ply around the other in a spiral. The multi-ply structures are considered as a single reinforcement band herein.

The reinforcement bands may be impermeable to the core material, when the core material is cast. The core material may be cast as a liquid reaction mixture, such as a reactive mixture of a polyol and a polyisocyante capable of forming a polyurethane. By way of further example, the core material may be in a melted state, such as a thermoplastic resin, or in a plastic state, such as unset concrete. Thus, the structure of the reinforcement band can be selected based on factors such as the viscosity of the core material being cast and the surface interaction of the reinforcement band material and core material being cast, to render the reinforcement band impermeable. Accordingly, the exterior side of one or both of the reinforcement bands is uncoated by the core material.

### Molds

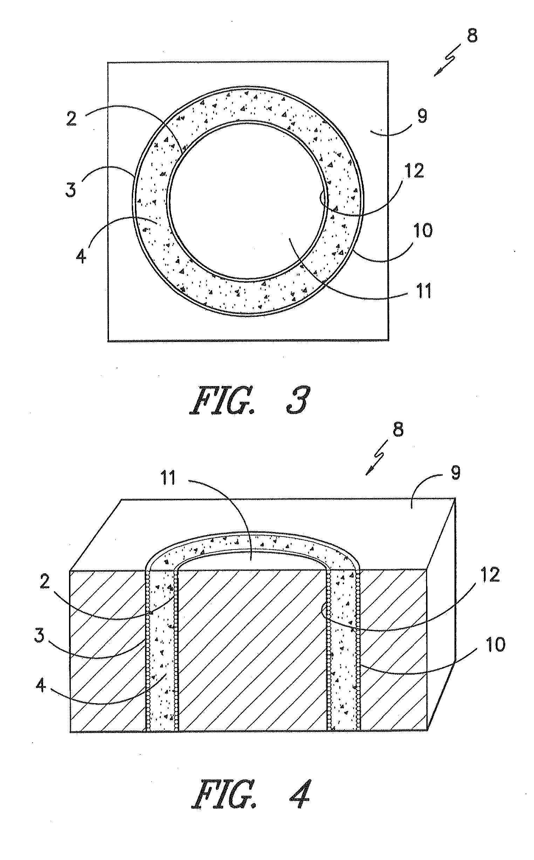

The core material is cast-in-place, that is, the inner and outer reinforcement bands are maintained in a spaced-apart, concentric orientation, and the core material is formed in situ. Referring to Figures 3 and 4, ring mold 8 has two parts - outer mold 9 having side wall 10, corresponding to the circumference of outer reinforcement band 3, and inner mold 11 having side wall 12, corresponding to the circumference of inner reinforcement band 2. The mold 8 may be made of any suitable material and provided with finishes or coatings to promote release of the annular reinforcement structure from the mold.

Any of a variety of techniques may be employed to maintain the alignment of the reinforcement bands in the mold. For example, the reinforcement bands may be held in place by friction, vertical ribs, steps, jigs, locating pins and combinations thereof. In one embodiment, the reinforcement bands are ferrous or contain ferrous components, and the reinforcements are held in place by magnets or electromagnets.

In one embodiment of the invention, the surfaces of side wall 10 of outer mold 9 and side wall 12 of inner mold 11 are coated with a resilient material. The coating may be a thermoplastic or thermoset material. By way of example, the coating may be an elastomer, in particular, silicone rubber. The advantage of a mold having resilient surfaces is that the outer reinforcement band, the inner reinforcement band, or both may be pressed into the surface to create a seal. Accordingly, even if a reinforcement band is permeable to the core material while it is being cast, at least a portion of the surface of the reinforcement band in contact with the side of the mold is prevented from being coated with core material, due to the seal created. The uncoated portion of the annular reinforced structure may then be bonded to another composition, such as a matrix material, which is being reinforced.

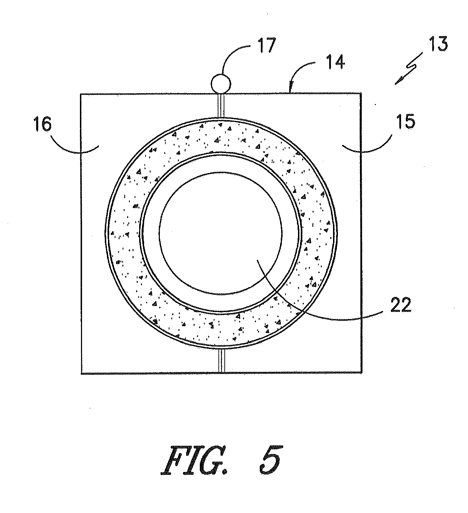

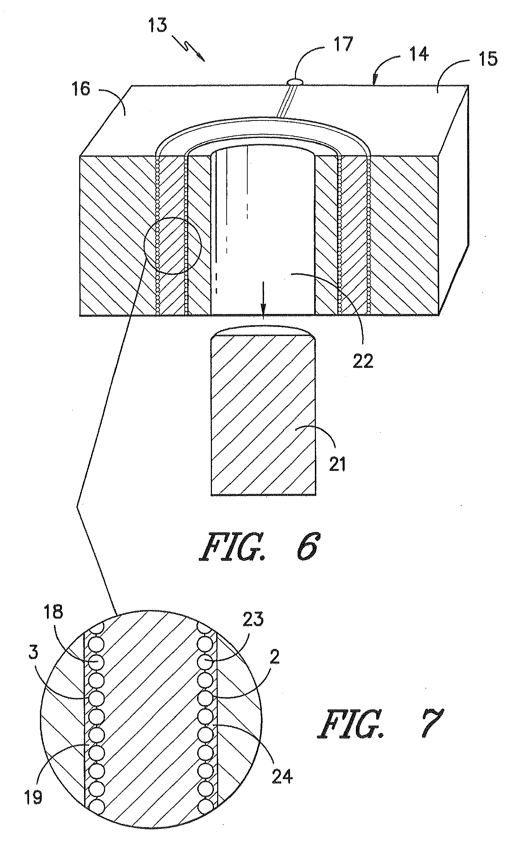

Referring to Figures 5, 6 and 7, mold 13 has outer mold 14 having two halves, 15 and 16, joined by hinge 17. Outer mold 14 can be "clamped" around outer reinforcement band 3, such that the cords 18 are pressed into the resilient surface 19 of mold 14. The second component of mold 13 is expandable, inner mold 20 having piston 21, which may be forced into the interior cavity 22 of inner mold 20, after inner reinforcement band 2 is placed over inner mold 20. Piston 21 causes inner mold 20 to expand, thereby pressing cords 23 of inner reinforcement band 2 into resilient surface 24 of inner mold 20. In the example illustrated, the outside of the outer reinforcement band and the inside of the inner reinforcement band would not be coated by a core material, even if the core material was cast from a low viscosity, liquid reaction mixture.

It can be understood that in many applications, it is desirable that the core material be bonded to one side of a reinforcement band and a second material, such as a matrix material, be bonded to the opposite side of a reinforcement band. By way of example, the reinforcement band may be formed of a cord would in a helix, and the relative surface area of the portion of the cord coated by the core material and the portion of the cord coated by the matrix material may vary from 70:30 to 30:70, or even from 10:90 to 90:10, respectively.

### Core Material

The inner and outer reinforcement bands are separated by a cast-in-place core material. The core material is a solid having a density of 0.75 g/cm³ or greater, a solid having a density of 0.90 g/cm³ or greater, or even a solid having a density of 1.1 g/cm³ or greater. The core material may be selected from a wide range of organic and inorganic materials that may be cast in place. By way of example, the core material may be a natural or synthetic polymer, including thermoplastic and thermosetting materials. In particular, the core material may be an elastomeric material, such as natural or synthetic rubber, which may be cured in situ, polyurethane, segmented copolyester, polyamide co-polymer and thermoplastic elastomers. In one embodiment of the invention, the core material is a polyurethane polymer formed without a blowing agent, that is, substantially without voids, which fills the space between the inner and outer reinforcement bands and is bonded thereto. In another example, the core material is a ceramic, concrete or organometalic compound.

The nature of the core material will dictate the method of casting the material in place. Accordingly, the core material may be cast as a reaction mixture capable of polymerizing, an uncured polymer capable of being cross-linked, or an inorganic plastic capable of being cured, for example a concrete which is hydrated and cured. Alternatively, the core material may be a polymer that has been melted and is allowed to cool, such as a thermoplastic resin. Various other additives may also be present in the core material, such as catalysts to promote polymerization or cross-linking, and compositions to modify the properties of the core material, such as plasticizers, as are known to those skilled in the art.

The method of making the annular reinforcement structure disclosed herein for two reinforcement bands and a core material could be repeated with a third reinforcement band and second core material, to produce an annular reinforced structure having three reinforcement bands, with each band separated by a the same or different core materials. For example, employing the methods and apparatus disclosed herein, it is possible to first assemble an outer reinforcement band and an intermediate reinforcement band with a core material interposed between, followed by assembly of the inner reinforcement band with a second core material between the inner reinforcement band and the intermediate reinforcement band.

### Reinforced Matrix Material

The annular reinforced structure of the present invention may be used to reinforce a matrix material. The annular reinforced structure may be covered with the matrix material, that is, the matrix material covers at least one surface of the structure, for example, the outside face of the outer reinforcement band. Alternatively, the annular reinforced structure may be embedded in the matrix material. In still another embodiment of the invention, a first matrix material may be bonded to the outer surface of the outer reinforcement band and a second material may be bonded to the inner surface of the inside reinforcement band.

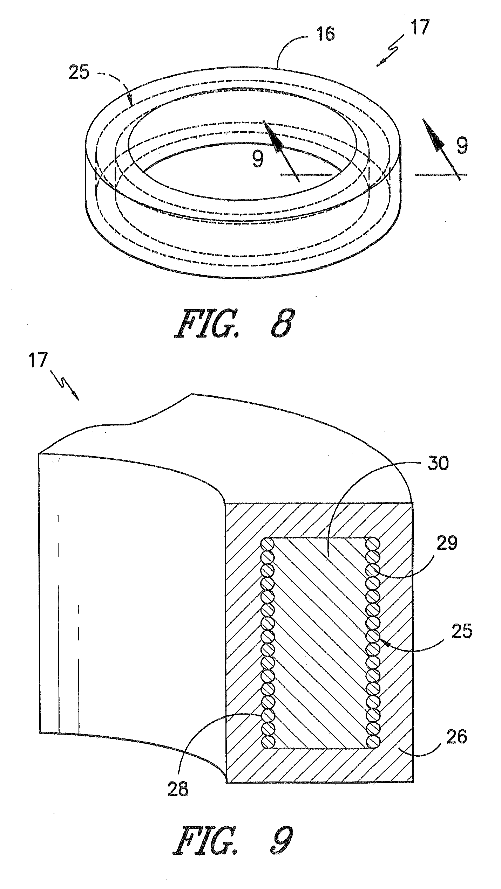

Referring to Figure 8 and 9, the annular reinforced structure 25 is shown embedded in a matrix material 26, to create reinforced ring 27. A cross-section of reinforced ring 27 is shown in Figure 9, showing annular reinforced structure 25 with inner reinforcement band 28, outer reinforcement band 29 and core material 30.

The matrix material may be selected from a wide range of organic and inorganic materials, especially those that may be cast with the annular reinforcement structure embedded therein. By way of example, the matrix material may be a natural or synthetic polymer, including thermoplastic and thermosetting materials. Of particular interest are elastomeric matrix materials, such as natural or synthetic rubber, polyurethane, segmented copolyester, polyamide co-polymer and thermoplastic elastomers. In one embodiment of the invention, core material 4 is a polyurethane polymer and the matrix material 26 is a polyurethane polymer, both formed without a blowing agent, that is, substantially without voids. In another example, the matrix material is a ceramic, concrete or organometalic compound.

The invention may be further understood by reference to the following claims.

## Claims

1. A method of making an annular reinforced structure, comprising the steps of:
(a) providing inner and outer reinforcement bands in a mold, whereby the inner and outer reinforcement bands are maintained in concentric spaced relationship;
(b) casting a core material in the mold, in the space between the inner and outer reinforcement bands, wherein the core material has a density of 0.75 g/cm3 or greater; and
(c) removing the annular reinforced structure from the mold.

2. The method of Claim 1, wherein the core material does not coat the outside of the outer reinforcement band, and/or the core material does not coat the inside of the inner reinforcement band.

3. The method of Claim 1, wherein the core material is selected from the group consisting of thermoplastic polymers, thermosetting polymers, ceramic, concrete and organometalic compounds.

4. The method of Claim 1, wherein the core material has a density of 0.90 g/cm³ or greater and
wherein, preferably, the core material is an elastomeric polymer or a polyurethane having a density of 0.90 g/cm³ or greater, respectively.

5. The method of Claim 1, wherein the mold comprises an outer ring having a resilient surface, wherein the outer ring of the mold surrounds the outer reinforcement band and the outside of the outer reinforcement band is pressed into the resilient surface of the outer ring to create a seal, thereby preventing the core material from coating the outside surface of the outer reinforcement band when the core material is cast, and
wherein, preferably, the outer reinforcement band is comprised of a cord selected from the group consisting of monofilament or multi-filament yarns, and the cord is wound into a helix making at least three revolutions.

6. The method of Claim 1, wherein the mold comprises an inner ring having a resilient surface, and the inner reinforcement band surrounds the inner ring and the inside of the inner reinforcement band is pressed into the resilient surface of the inner ring to create a seal thereby preventing the core material from coating the inside surface of the inner reinforcement band when the core material is cast, and
wherein, preferably, the inner reinforcement band is comprised of a cord selected from the group consisting of monofilament or multi-filament yarns, and the cord is wound into a helix making at least three revolutions.

7. The method of Claim 1, wherein the core material is introduced into the space between the inner and outer reinforcement bands as a liquid reaction mixture capable of polymerizing, and wherein, preferably the outer reinforcement band is impermeable to the liquid reaction mixture, and/or the inner reinforcement band is impermeable to the liquid reaction mixture.

8. The method of Claim 1, further comprising the step of embedding or partially embedding the annular reinforced structure in a matrix material, after the annular reinforced structure has been removed from the mold, and
wherein, preferably, the matrix material is selected from the group consisting of thermoplastic polymers, thermosetting polymers, ceramic, concrete and organometalic compounds, and
wherein, more preferably, the core material and the matrix material are different compositions.

9. An annular reinforced structure, comprising:
(a) an inner reinforcement band;
(b) an outer reinforcement band positioned around the inner reinforcement band, whereby the inner and outer reinforcement bands are spaced apart and concentric, and the outer reinforcement band having an exterior side, opposite the inner reinforcement band; and
(c) a cast-in-place, core material having a density of 0.75 g/cm3 or greater, positioned between and bonded to the inner and outer reinforcement bands, whereby at least a portion of the exterior side of the outer reinforcement band is not coated by the core material.

10. An annular reinforced structure, comprising:
(a) an outer reinforcement band;
(b) an inner reinforcement band, positioned inside the outer reinforcement band, whereby the inner and outer reinforcement bands are spaced apart and concentric, and the inner reinforcement band having an exterior side, opposite the outer reinforcement band; and
(c) a cast-in-place, core material having a density of 0.75 g/cm3 or greater, positioned between and bonded to the inner and outer reinforcement bands, whereby at least a portion of the exterior side of the inner reinforcement band is not coated by the core material.

11. The annular reinforced structure of Claim 9, wherein the outer reinforcement band is impermeable to the core material, when the core material is cast-in-place.

12. The annular reinforced structure of Claim 10, wherein the inner reinforcement band is impermeable to the core material, when the core material is cast-in-place.

13. The annular reinforced structure of Claim 9, wherein the inner reinforcement band has an exterior side opposite the outer reinforcement band and at least a portion of the exterior side of the inner reinforcement band is not coated by the core material.

14. The annular reinforced structure of Claim 9, wherein the inner reinforcement band is impermeable to the core material, when the core material is cast-in-place.

15. The annular reinforced structure of any one of claims 9 and 10, wherein the structure is a modular unit.

16. The annular reinforced structure of Claim 9, where the structure is the product of the process of supporting the inner and outer reinforcement bands in mold, when the core material is cast-in-place, and wherein the mold comprises an outer ring having a resilient surface, wherein the outer ring of the mold surrounds the outer reinforcement band and the exterior side of the outer reinforcement band is pressed into the resilient surface of the outer ring to create a seal, thereby preventing the core material from coating at least a portion the exterior side of the outer reinforcement band when the core material is cast, and.
wherein, preferably, the outer reinforcement band is comprised of a cord selected from the group consisting of monofilament or multi-filament yarns, and the cord is wound into a helix making at least three revolutions.

17. The annular reinforced structure of Claim 10, where the structure is the product of the process of supporting the inner and outer reinforcement bands in mold, when the core material is cast-in-place, and the mold comprises an inner ring having a resilient surface, and the inner reinforcement band surrounds the inner ring and the exterior side of the inner reinforcement band is pressed into the resilient surface of the inner ring to create a seal thereby preventing the core material from coating the exterior side of the inner reinforcement band when the core material is cast, and
wherein, preferably, the outer reinforcement band is comprised of a cord selected from the group consisting of monofilament or multi-filament yarns, and the cord is wound into a helix making at least three revolutions.
